# EUROPÄISCHE PATENTSCHRIFT

(11) **EP 1 518 111 B1**
(45) Veröffentlichungstag und Bekanntmachung des Hinweises auf die Patenterteilung: **25.02.2009**
(21) Anmeldenummer: 03759816.6
(22) Anmeldetag: 21.05.2003
(51) Int. Cl.: G01N 27/419

(54) **SENSORELEMENT FÜR EINEN MESSFÜHLER ZUR BESTIMMUNG DER SAUERSTOFFKONZENTRATION IM ABGAS VON BRENNKRAFTMASCHINEN**
SENSOR ELEMENT FOR A SENSOR FOR DETERMINING THE OXYGEN CONCENTRATION IN THE EXHAUST GAS OF INTERNAL COMBUSTION ENGINES
ELEMENT DETECTEUR D'UN CAPTEUR DE MESURE PERMETTANT DE DETERMINER LA CONCENTRATION EN OXYGENE DES GAZ D'ECHAPPEMENT DE MOTEURS A COMBUSTION INTERNE

(30) Priorität: 18.06.2002 DE 10227012
(43) Veröffentlichungstag der Anmeldung: 30.03.2005
(73) Patentinhaber: ROBERT BOSCH GMBH, 70442 Stuttgart (DE)
(72) Erfinder: SCHUMANN, Bernd, 71277 Rutesheim (DE)
(86) Internationale Anmeldenummer: PCT/DE2003/001639
(87) Internationale Veröffentlichungsnummer: WO 2003/106989

(56) Entgegenhaltungen:
- EP-A- 0 961 115
- EP-A- 1 167 957
- DE-A1- 19 941 051
- DE-C1- 10 035 036
- PATENT ABSTRACTS OF JAPAN vol. 2000, no. 02, 29. Februar 2000 (2000-02-29) & JP 11 326273 A (TOYOTA MOTOR CORP;NGK INSULATORS LTD), 26. November 1999 (1999-11-26)
- PATENT ABSTRACTS OF JAPAN vol. 017, no. 509 (P-1612), 13. September 1993 (1993-09-13) & JP 05 133932 A (NGK INSULATORS LTD), 28. Mai 1993 (1993-05-28)

## Beschreibung

### Stand der Technik

Die Erfindung geht aus von einem Sensorelement für einen Meßfühler zur Bestimmung der Sauerstoffkonzentration im Abgas von Brennkraftmaschinen, insbesondere für eine Breitband-Lambdasonde, nach dem Oberbegriff des Anspruchs 1.

Bei einem bekannten Sensorelement für eine Lambdasonde zur Bestimmung des sog. Lambda-Wertes als Maß für die Sauerstoffkonzentration im Abgas der Brennkraftmaschine (DE 198 57 471 A1) sind der die Innenelektrode der Pumpzelle aufnehmende Hohlraum, die Diffusionskammer mit Diffusionsbarriere und die Vorkammer ringförmig um eine in den vorzugsweise aus Zirkoniumoxid (ZrO₂) bestehenden, ionenleitenden Festelektrolyten eingebrachte Bohrung ausgebildet, so daß die Vorkammer eine zylindermantelförmige Zutrittsöffnung für das Abgas und der Diffusionskanal eine zylindermantelförmige Eintrittsöffnung von der Vorkammer her und eine zylinderförmige Austrittsöffnung zum Hohlraum hin aufweist. Die Vorkammer hat dabei eine nur geringe radiale Tiefe, die mindestens so groß bemessen ist, daß ein die Bohrung im Festelektrolyten herstellendes Bohrwerkzeug beim Bohrprozeß nicht die innere Zylinderwand der Diffusionsbarriere berührt und dort die Poren der Diffusionsbarriere verschmiert, was zu einer Veränderung des Diffusionswiderstandes der Diffusionsbarriere führen würde.

Bei hohen Anteilen an un- oder teilverbrannten Kohlenwasserstoffen im Abgas, wie sie beispielsweise bei der Kraftstoff-Nacheinspritzung zur Rußfiltergenerierung bei Dieselmotoren entstehen, leidet die Genauigkeit der Messung des Meßfühlers unter den unterschiedlichen Diffusionskoeffizienten von Kohlenwasserstoffen und Sauerstoff beim Durchgang durch die Diffusionsbarriere. Je nach Art der Kohlenwasserstoffe haben diese unterschiedlich große Moleküle und damit einen Diffusionskoeffizienten, der größer oder kleiner oder gleich dem von Sauerstoff ist. Großmolekulare Kohlenwasserstoffe, wie z.B. Dekan, durchdringen die Diffusionsbarriere mit deutlich kleinerer Diffusionsgeschwindigkeit als Sauerstoff, so daß pro Zeiteinheit deutlich weniger Kohlenwasserstoffe durch die Diffusionsbarriere hindurchtreten und in den Hohlraum gelangen. In dem Hohlraum der Pumpzelle wird nach der Reaktion der Kohlenwasserstoffe mit Sauerstoff weniger Sauerstoff verbraucht, als es nach der Konzentration der Gasanteile im Abgas stöchiometrisch zu erwarten wäre. Der Meßfühler mißt also eine zu hohe Sauerstoffkonzentration. Umgekehrt durchdringen kleinmolekulare Kohlenwasserstoffe, wie z.B. Methan, die Diffusionsbarriere mit größerer Geschwindigkeit als Sauerstoff. In den Hohlraum werden also mehr Kohlenwasserstoffe eintreten und auch mehr Sauerstoff abreagieren, als dies nach der Konzentration im Abgas zu erwarten wäre. Der Meßfühler mißt daher eine zu niedrige Sauerstoffkonzentration.

Ein Sensorelement gemäß dem Oberbegriff des Anspruchs 1 ist auch aus DE 19941051 bekannt.

### Vorteile der Erfindung

Das erfindungsgemäße Sensorelement mit den Merkmalen des Anspruchs 1 hat den Vorteil, daß durch den der Diffusionsbarriere vorgeordneten Katalysator die Kohlenwasserstoffe effizient oxidieren. Damit enthält das durch die Diffusionsbarriere in den Hohlraum eindringende Abgasvolumen keine unverbrannten Kohlenwasserstoffe mit von dem Diffusionskoeffizienten des Sauerstoffs abweichenden Diffusionskoeffizienten, so daß das stöchiometrische Verhältnis des Sauerstoffs noch vor der Diffusionsbarriere eingestellt und in dem in dem Hohlraum vorhandenen Abgasvolumen nicht mehr verändert wird, der Meßfühler also korrekte Lambdawerte liefert.

Durch die in den weiteren Ansprüche aufgeführten Maßnahmen sind vorteilhafte Weiterbildungen und Verbesserungen des im Anspruchs 1 angegebenen Sensorelements möglich.

Gemäß einer bevorzugten Ausführungsform der Erfindung wird der Katalysator in der Vorkammer als elektrochemischer Katalysator betrieben, wozu in der Vorkammer an zwei gegenüberliegenden Kammerwänden räumlich beabstandete und elektrisch miteinander verbundene Elektroden aus einem elektrisch leitfähigen Material angeordnet sind, das im wesentlichen ein Edelmetall, z. B. Platin, Rhodium, Palladium, und/oder eine Legierung davon enthält, wobei dem Elektrodenmaterial noch ein Zusatz von oxidationsförderndem Oxid, z.B. Aluminiumoxid oder Ceroxid, hinzugefügt sein kann.

Gemäß alternativen Ausführungsformen der Erfindung wird der elektrochemische Katalysator entweder während des Betriebs des Meßfühlers permanent oder zeitbegrenzt, z.B. nur bei der Kraftstoffnacheinspritzung, an Gleichspannung gelegt oder die elektrische Leitfähigkeit der Vorkammerelektroden lediglich dazu benutzt, die Elektroden als Katalysator zu formieren. Im ersten Fall werden die Vorkammerelektroden so betrieben, daß elektrochemisch Sauerstoff in die Vorkammer gepumpt wird, der dann die Kohlenwasserstoffe effizient oxidiert. Hierzu werden die Vorkammerelektroden anodisch belastet, wozu eine Gleichspannung mit einem gegenüber der Außenelektrode der Pumpzelle höheren Potential an die Vorkammerelektroden gelegt wird. Im zweiten Fall der Formierung wird eine kathodischer Strom an die Vorkammerelektroden gelegt, wozu die Vorkammerelektroden mit einem gegenüber der Außenelektrode der Pumpzelle niedrigeren Potential beaufschlagt werden. Dieser kathodischer Strom fließt für einige Minuten bei einer Spannung, die über der Zersetzungsspannung des Festelektrolytmaterials liegt. Dadurch bildet sich auf der Oberfläche der Vorkammerelektroden elektrochemisch ein Cermet aus dem Elektrodenmetall und dem Zirkoniumoxid des Festelektrolyten, das den Vorkammerelektroden eine sehr gute katalytische Aktivität verleiht. Vorzugsweise wird dabei das Sensorelement einer Temperatur zwischen 800°C - 1200°C ausgesetzt.

Die Formierung des Katalysators wird nach dem Sinterprozeß des Sensorelements durchgeführt und kann auf eine einmalige Formierung beschränkt bleiben. In diesem Fall ist es nicht erforderlich eine Anschlußleitung für die Vorkammerelektroden aus dem Sensorelement herauszuführen, da die Vorkammerelektroden bei der einmaligen Formierung durch die Zutrittsöffnung in der Vorkammer hindurch kontaktiert werden können. Es ist jedoch auch möglich, die Formierung des Katalysators in der Vorkammer auch während des Gebrauchs des Meßfühlers von Zeit zu Zeit wiederkehrend vorzunehmen. In diesem Fall ist eine zu den Vorkammerelektroden führende Anschlußleitung vorzusehen, die mit dem Steuergerät des Meßfühlers zu verbinden ist.

### Zeichnung

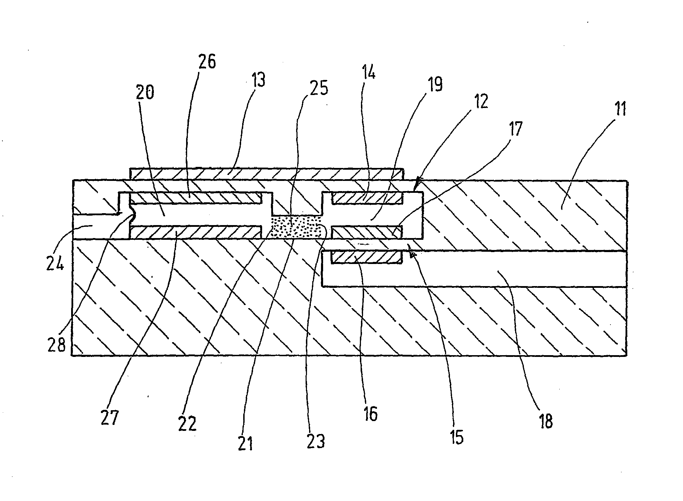

Die Erfindung ist anhand eines in der Zeichnung dargestellten Ausführungsbeispiels im folgenden näher beschrieben. Dabei zeigt die Zeichnung in schematischer Darstellung einen Querschnitt eines Sensorelements für einen als Breitband-Lambdasonde ausgebildeten Meßfühler.

### Beschreibung des Ausführungsbeispiels

Das in der Zeichnung schematisch skizzierte Sensorelement für einen als Breitband-Lambdasonde ausgebildeten Meßfühler zur Bestimmung der Sauerstoffkonzentration im Abgas von Brennkraftmaschinen weist einen den Sensorkörper bildenden Festelektrolyten 11 auf, der z.B. aus yttriumstabilisiertem Zirkoniumoxid besteht und üblicherweise schichtförmig aus einzelnen Keramikschichten zusammengesetzt ist, die durch einen Sinterprozeß miteinander verbunden werden. Auf die Darstellung der einzelnen Keramikschichten ist verzichtet worden.

In dem Festelektrolyten 11 ist eine nach dem Grenzstromprinzip arbeitende Pumpzelle 12 mit Außenelektrode 13 und Innenelektrode 14 sowie eine Meß- oder Nernstzelle 15 mit einer Referenzelektrode 16 und einer Nernst- oder Meßelektrode 17 ausgebildet. Die Referenzelektrode 16 ist in einem im Festelektrolyten 11 ausgebildeten Referenzkanal 18 angeordnet, der mit einem Referenzgas, vorzugsweise Luft, beaufschlagt ist. Alternativ kann die Referenzgasatmosphäre auch elektrochemisch erzeugt werden. In diesem Fall wird der Referenzkanal 18 durch eine nur sehr wenig gasdurchlässige Schicht ersetzt. In dem Festelektrolyten 11 ist weiter ein Hohlraum 19, eine dem Hohlraum 19 vorgelagerte Vorkammer 20 und ein die Vorkammer 20 mit dem Hohlraum 19 verbindender Diffusionskanal 21 ausgebildet, der eine Eintrittsöffnung 22 zur Vorkammer 20 hin und eine Austrittsöffnung 23 zum Hohlraum 19 hin aufweist. Die Vorkammer 20 weist eine Zutrittsöffnung 24 auf, durch die Abgas in die Vorkammer 20 einzutreten vermag. Der Diffusionskanal 21 ist mit einer Diffusionsbarriere 25 gefüllt, die beispielsweise aus Aluminiumoxid (Al₂O₃) oder Zirkoniumoxid (ZrO₂) besteht und einen bestimmten Diffusionswiderstand aufweist. Dem Barrierematerial kann auch noch katalytisch aktives Material, wie Platin, beigemengt sein. In dem Hohlraum 19 sind die Meßelektrode 17 der Nernstzelle 15 und die Innenelektrode 14 der Pumpzelle 12 räumlich beabstandet angeordnet. Meßelektrode 17 und Innenelektrode 14 können elektrisch und mechanisch miteinander verbunden sein. Die geometrische Anordnung von Hohlraum 19 und Referenzkanal 18 ist dabei so getroffen, daß einerseits die Referenzelektrode 16 und die Meßelektrode 17 der Nernstzelle 15 und andererseits die Innenelektrode 14 und die Außenelektrode 13 der Pumpzelle 12 durch den Festelektrolyten 11 voneinander getrennt sind. Die Außenelektrode 13 ist auf der Oberfläche des Festelektrolyten 11 angeordnet und bei Gebrauch des Meßfühlers dem Abgas ausgesetzt. Die Zutrittsöffnung 24 der Vorkammer 20 ist so festgelegt, daß der Zutrittsquerschnitt der Vorkammer 20 für das Abgas im Vergleich zum Zutrittsquerschnitt der Diffusionsbarriere 25 wesentlich größer ist und zwar mindestens so groß, daß der Zutrittsquerschnitt der Vorkammer 20 den Diffusionswiderstand der Diffusionsbarriere 25 für das Abgas nur wenig erhöht. Üblicherweise ist mit dem Festelektrolyten 11 noch ein auf einem Träger angeordneter Widerstandsheizer verbunden, um das Sensorelement auf die erforderliche Betriebsspannung aufzuheizen. Auf die Darstellung dieses Widerstandsheizers ist hier verzichtet worden.

Wie eingangs bereits beschrieben worden ist, beeinträchtigt ein hoher Anteil von un- oder teilverbrannten Kohlenwasserstoffen im Abgas die Meßgenauigkeit des Sensorelements, was zu Meßfehlern beim Lambdawert führt. Zur Vermeidung dieses Meßfehlers ist in der Vorkammer 20 ein Katalysator zur Oxidation von Kohlenwasserstoffen angeordnet. Dieser Katalysator kann ein rein chemischer Katalysator sein, wozu die Vorkammer 20 mit einer Schüttung aus einem oxidationsfördernden Katalysatormaterial gefüllt ist. Als Katalysatormaterial eignet sich Zirkoniumoxid (ZrO₂), Platin (Pt), Rhodium (Rh) und Palladium (Pd).

Im dargestellten Ausführungsbeispiel des Sensorelements wird der Katalysator als elektrochemischer Katalysator betrieben, wozu in der Vorkammer 20 an zwei einander gegenüberliegenden Kammerwänden jeweils eine Elektrode 26 bzw. 27 aus einem elektrisch leitfähigen Material angeordnet ist. Die die Elektroden 26, 27 tragenden Kammerwände sind parallel zueinander ausgerichtet und erstrecken sich parallel zu den Mittenachsen der Zutrittsöffnung 24 und der Eintrittsöffnung 22, die ihrerseits miteinander fluchten. Das Elektrodenmaterial besteht im wesentlichen aus Edelmetall, z.B. Platin, Rhodium, Palladium, und/oder einer Legierung davon, wobei noch oxidationsförderndes Oxid, z.B. Zirkoniumoxid (ZrO₂), Zeolith, Aluminiumoxid (Al₂O₃) oder Ceroxid (Ce₂O₃), zur Verbesserung der katalytischen Wirkung zugesetzt sein kann. Die beiden Elektroden 26, 27 sind elektrisch leitend miteinander verbunden, was in der Zeichnung durch die Verbindungsleitung 28 symbolisiert ist. Während des Betriebs des Meßfühlers werden die Elektroden 26, 27 an ein gegenüber der Außenelektrode 13 der Pumpzelle 12 höheres Gleichspannungspotential gelegt. Dadurch werden elektrochemisch Sauerstoffionen aus dem Festelektrolyten 11 in die Vorkammer 20 gepumpt, die die Kohlenwasserstoffe, die in dem in die Vorkammer 20 eindringenden Abgasvolumen enthalten sind, effizient oxidieren. Damit treten keine unverbrannten Kohlenwasserstoffe durch die Diffusionsbarriere 25 hindurch, und das stöchiometrische Verhältnis der Sauerstoffkonzentration im Hohlraum 19 wird nicht verfälscht. Das Anlegen der Gleichspannung kann permanent erfolgen oder nur in Betriebsphasen der Brennkraftmaschine, in denen im Abgas ein hoher Anteil an un- oder teilverbrannten Kohlenwasserstoffen entsteht, z.B. bei der Kraftstoff-Nacheinspritzung zur Rußfiltergenerierung oder zur Aufheizung des Abgaskatalysators.

Im elektrischen Betrieb des elektrochemischen Katalysators wird ein Teil des in der Vorkammer 20 elektrisch erzeugten Sauerstoffs über die Zutrittsöffnung 24 wieder in das Abgas austreten. Dieser Teil kann aber durch Vermessungen im Gasprüfständen numerisch bestimmt werden und wird bei der Berechnung des tatsächlichen Sauerstoffgehalts im Abgas aus dem Stromsignal der Pumpzelle 12 in Betracht gezogen.

In einer alternativen Ausführungsform des Sensorelements wird der elektrochemische Katalysator in der Vorkammer 19 nicht elektrisch betrieben, sondern die elektrische Leitfähigkeit der Elektroden 26, 27 dazu benutzt, die Elektroden 26, 27 als Katalysator zu formieren, da die Elektroden 26, 27 im allgemeinen im Cofiring hergestellt werden und infolge der hohen Sintertemperaturen, denen das Sensorelement bei der Herstellung ausgesetzt wird, eine schlechte katalytische Aktivität aufweisen. Zur Formierung des Katalysators wird an die Elektroden 26, 27 für einige Minuten eine über der Zersetzungsspannung des Zirkoniumoxids des Festelektrolyten 11 liegende Spannung, z.B. 1,3 - 2V gegen Luftreferenz, angelegt, so daß ein kathodischer Strom über die Elektroden 26, 27 fließt, und das Sensorelement einer Temperatur zwischen 800 - 1200°C ausgesetzt. Bei diesem Vorgang bildet sich auf elektrochemischem Weg auf der Oberfläche der Elektroden 26, 27 ein Cermet aus dem Elektrodenmaterial und dem Zirkoniumoxid, das eine hohe katalytische Aktivität besitzt. Diese Formierung kann ein einziges Mal nach der Sinterung des Sensorelements durchgeführt werden, kann jedoch auch bei Gebrauch des Meßfühlers wiederkehrend vorgenommen werden. Im letzten Fall ist eine zu den Elektroden 26, 27 führenden Anschlußleitung aus dem Sensorelement herauszuführen.

Die Erfindung ist nicht auf das beschriebene Sensorelement für eine Breitband-Lambdasonde mit Pumpzelle 12 und Nernstzelle 15 beschränkt. So kann das Sensorelement auch für einen als sog. Magersonde konzipierten Meßfühler verwendet werden. In diesem Fall entfällt die Nernstzelle 15 mit ihrer Referenzelektrode 16 und Meßelektrode 17 sowie der Referenzkanal 18. Auch dieses nur noch die Pumpzelle 12 enthaltendes Sensorelement arbeitet nach dem Grenzstromprinzip.

Darüber hinaus ist es möglich, den Zwischenraum zwischen den in der Vorkammer 20 angeordneten Elektroden 26, 27 zusätzlich mit einem katalytisch aktiven Material zu füllen. Als Material kann - wie bei dem vorn beschriebenen chemischen Katalysator in der Vorkammer 20 - wiederum ZrO₂, Pt, Rh, Pd verwendet werden.

## Patentansprüche

1. Sensorelement für einen Messfühler zur Bestimmung der Sauerstoffkonzentration im Abgas von Brennkraftmaschinen, insbesondere für eine Breitband-Lambdasonde, mit einem ionenleitenden Festelektrolyten (11), der mit einer in einem Hohlraum (19) im Festelektrolyten (11) angeordneten Innenelektrode (14) und einer außen auf dem Festelektrolyten (11) angeordneten, dem Abgas ausgesetzten Außenelektrode (13) eine Pumpzelle (12) bildet und der zusammen mit einer in dem Hohlraum (19) angeordneten Nernst- oder Messelektrode (17) und einer in einem Referenzkanal (18) angeordneten Referenzelektrode (16) eine Mess- oder Nernstzelle (15) bildet mit einer im Festelektrolyten (11) ausgebildeten Vorkammer (20), die eine Zutrittsöffnung (24) für das Abgas aufweist und mit einem im Festelektrolyten (11) ausgebildeten Diffusionskanal (21), der eine Eintrittsöffnung (22) zur Vorkammer (20) hin und eine Austrittsöffnung (23) zum Hohlraum (19) hin aufweist und mit einer Diffusionsbarriere (25) ausgefüllt ist, **dadurch gekennzeichnet, dass** in der Vorkammer (20) ein Katalysator zur Oxidation von Kohlenwasserstoffen angeordnet ist.

2. Sensorelement nach Anspruch 1, **dadurch gekennzeichnet, daß** der Katalysator ein chemischer Katalysator ist.

3. Sensorelement nach Anspruch 2, **dadurch gekennzeichnet, daß** die Vorkammer (20) mit einer Schüttung aus einem oxidationsfördernden Katalysatormaterial gefüllt ist, z.B. Zirkoniumoxid, Platin, Rhodium oder Palladium.

4. Sensorelement nach Anspruch 1, **dadurch gekennzeichnet, daß** der Katalysator als elektrochemischer Katalysator betrieben ist.

5. Sensorelement nach Anspruch 4, **dadurch gekennzeichnet, daß** der Katalysator zwei an gegenüberliegenden Kammerwänden der Vorkammer (20) angeordnete, miteinander elektrisch leitend verbundene Elektroden (26, 27) aus einem elektrisch leitfähigen Material aufweist, das im wesentlichen ein Edelmetall, vorzugsweise Platin, Rhodium, Palladium, und/oder eine Legierung davon enthält.

6. Sensorelement nach Anspruch 5, **dadurch gekennzeichnet, daß** dem Elektrodenmaterial ein oxidationsförderndes Oxid, z.B. Zirkoniumoxid, Zeolith, Aluminiumoxid oder Ceroxid, zugesetzt ist.

7. Sensorelement nach Anspruch 5 oder 6, **dadurch gekennzeichnet, daß** die die Elektroden (26, 27) tragenden Kammerwände der Vorkammer (20) parallel zu den Mittenachse der Zutrittsöffnung (24) der Vorkammer (20) und der Eintrittsöffnung (22) des Diffusionskanals (21) ausgerichtet sind und vorzugsweise daß die Mittenachse miteinander fluchten.

8. Sensorelement nach einem der Ansprüche 1 - 7, **dadurch gekennzeichnet, daß** der Zutrittsquerschnitt der Vorkammer (20) für das Abgas sehr viel größer ist als der Zutrittsquerschnitt an der Diffusionsbarriere (25) im Diffusionskanal (21).

9. Sensorelement nach einem der Ansprüche 5 - 8, **dadurch gekennzeichnet, daß** während des Betriebs des Meßfühlers die Elektroden (26, 27) der Vorkammer (20) permanent oder zeitweise an einem gegenüber der Außenelektrode (13) der Pumpzelle (12) höheren Gleichspannungspotential liegen.

10. Sensorelement nach einem der Ansprüche 5 - 7, **dadurch gekennzeichnet, daß** die Oberflächen der Elektroden (26, 27) in der Vorkammer (20) mit einem mittels eines elektrochemischen Formierprozesses aus dem Elektrodenmaterial und dem Material des Festelektrolyten (11) gebildeten Cermet überzogen sind.

11. Verfahren zum Formieren der Elektroden (26, 27) in der Vorkammer (20) im Sensorelement nach Anspruch 7, **dadurch gekennzeichnet, daß** an die Elektroden (26, 27) der Vorkammer (20) und an die Außenelektrode (13) der Pumpzelle (12) eine Gleichspannung mit einem an der Außenelektrode (13) höheren Potential zeitbegrenzt angelegt wird.

12. Verfahren nach Anspruch 11, **dadurch gekennzeichnet, daß** die Gleichspannung größer ist als die Zersetzungsspannung des Materials des Festelektrolyten (11).

13. Verfahren nach Anspruch 10 oder 11, **dadurch gekennzeichnet, daß** während des Anlegens der Gleichspannung der Festelektrolyt (11) auf eine Temperatur zwischen 800 - 1200°C erwärmt wird.

14. Verfahren nach einem der Ansprüche 11 - 13, **dadurch gekennzeichnet, daß** die Zeitdauer der Gleichspannungsbelastung der Elektroden (26, 27) einige Minuten beträgt.

15. Verfahren nach einem der Ansprüche 11 - 14, **dadurch gekennzeichnet, daß** das zeitbegrenzte Anlegen der Gleichspannung während des Gebrauchs des Meßfühlers wiederholt durchgeführt wird.

## Claims

1. Sensor element for a measurement sensor for determination of the oxygen concentration in the exhaust gas of internal combustion engines, in particular for a broadband lambda probe, having an ion-conducting solid electrolyte (11) which, together with an inner electrode (14) which is arranged in a cavity (19) in the solid electrolyte (11) and an outer electrode (13) which is arranged externally on the solid electrolyte (11) and is exposed to the exhaust gas, forms a pump cell (12) and which, together with a Nernst or measurement electrode (17) which is arranged in the cavity (19) and a reference electrode (16) which is arranged in a reference channel (18), forms a measurement or Nernst cell (15) having an inlet chamber (20) which is formed in the solid electrolyte (11) and has an access opening (24) for the exhaust gas, and having a diffusion channel (21), which is formed in the solid electrolyte (11), has an inlet opening (22) to the inlet chamber (20) and an outlet opening (23) to the cavity (19) and is filled with a diffusion barrier (25), **characterized in that** a catalyst for the oxidation of hydrocarbons is arranged in the inlet chamber (20).

2. Sensor element according to Claim 1, **characterized in that** the catalyst is a chemical catalyst.

3. Sensor element according to Claim 2, **characterized in that** the inlet chamber (20) is filled with a filling composed of a catalyst material which promotes oxidation, for example zirconium oxide, platinum, rhodium or palladium.

4. Sensor element according to Claim 1, **characterized in that** the catalyst is operated as an electrochemical catalyst.

5. Sensor element according to Claim 4, **characterized in that** the catalyst has two electrodes (26, 27) which are arranged on opposite chamber walls of the inlet chamber (20), are electrically conductively connected to one another and are composed of an electrically conductive material which essentially contains a noble metal, preferable platinum, rhodium, palladium, and/or an alloy thereof.

6. Sensor element according to Claim 5, **characterized in that** an oxidation-promoting oxide, for example zirconium oxide zeolite, aluminium oxide or cerium oxide, is added to the electrode material.

7. Sensor element according to Claim 5 or 6, **characterized in that** the chamber walls, to which the electrodes (26, 27) are fitted, of the inlet chamber (20) are aligned parallel to the centre axis of the access opening (24) to the inlet chamber (20) and the inlet opening (22) of the diffusion channel (21), and preferably such that the centre axes are aligned with one another.

8. Sensor element according to one of Claims 1 - 7, **characterized in that** the access cross section of the inlet chamber (20) for the exhaust gas is very much larger than the access cross section at the diffusion barrier (25) in the diffusion channel (21).

9. Sensor element according to one of Claims 5 - 8, **characterized in that**, during operation of the measurement sensor, the electrodes (26, 27) of the inlet chamber (20) are permanently or at times at a DC voltage potential which is higher than that of the outer electrode (13) of the pump cell (12).

10. Sensor element according to one of Claims 5 - 7, **characterized in that** the surfaces of the electrodes (26, 27) in the inlet chamber (20) are coated with a cermet which is formed by means of an electrochemical forming process from the electrode material and the material of the solid electrolyte (11).

11. Method for forming the electrodes (26, 27) in the inlet chamber (20) in the sensor element according to Claim 7, **characterized in that** a DC voltage at a potential which is higher than that on the outer electrode (13) is applied for a limited time to the electrodes (26, 27) of the inlet chamber (20) and to the outer electrode (13) of the pump cell (12).

12. Method according to Claim 11, **characterized in that** the DC voltage is higher than the decomposition voltage of the material of the solid electrolyte (11).

13. Method according to Claim 10 or 11, **characterized in that**, while the DC voltage is applied, the solid electrolyte (11) is heated to a temperature of between 800 and 1200°C.

14. Method according to one of Claims 11 - 13, **characterized in that** the time duration of the DC voltage load on the electrodes (26, 27) is several minutes.

15. Method according to one of Claims 11 - 14, **characterized in that** the time-limited application of the DC voltage is carried out repeatedly during the use of the measurement sensor.

## Revendications

1. Elément de détection pour sonde de mesure servant à déterminer la concentration en oxygène dans les gaz d'échappement de moteurs à combustion interne, en particulier pour une sonde lambda à large bande, lequel élément présente :
un électrolyte fixe (11) ioniquement conducteur qui forme une cellule de pompage (12) avec une électrode intérieure (14) disposée dans une cavité (19) ménagée dans l'électrolyte fixe (11) et
une électrode extérieure (13) exposée aux gaz d'échappement et disposée extérieurement sur l'électrolyte fixe (11), qui forme une cellule de mesure ou de Nernst (15) avec une électrode de Nernst ou de mesure (17) disposée dans la cavité (19) et une électrode de référence (16) disposée dans un canal de référence (18),
une pré-chambre (20) formée dans l'électrolyte fixe (11) et dotée d'une ouverture d'entrée (24) pour les gaz d'échappement
et un canal de diffusion (21) formé dans l'électrolyte fixe (11), qui présente une ouverture d'entrée (22) qui débouche dans la pré-chambre (20) et une ouverture de sortie (23) qui débouche dans la cavité (19) et qui est remplie d'une barrière de diffusion (25),
**caractérisé en ce que**
un catalyseur d'oxydation des hydrocarbures est disposé dans la pré-chambre (20).

2. Elément de détection selon la revendication 1, **caractérisé en ce que** le catalyseur est un catalyseur chimique.

3. Elément de détection selon la revendication 2, **caractérisé en ce que** la pré-chambre (20) est remplie d'une charge de matériau catalyseur favorisant l'oxydation, par exemple de l'oxyde de zirconium, du platine, du rhodium ou du palladium.

4. Elément de détection selon la revendication 1, **caractérisé en ce que** le catalyseur fonctionne comme catalyseur électrochimique.

5. Elément de détection selon la revendication 4, **caractérisé en ce que** le catalyseur présente deux électrodes (26, 27) en un matériau électriquement conducteur, reliées de manière électriquement conductrice l'une à l'autre et disposées sur des parois opposées de la pré-chambre (20), le matériau contenant essentiellement un métal précieux, de préférence du platine, du rhodium, du palladium et/ou un de leurs alliages.

6. Elément de détection selon la revendication 5, **caractérisé en ce qu'**un oxyde qui favorise l'oxydation, par exemple de l'oxyde de zirconium, une zéolithe, de l'oxyde d'aluminium ou de l'oxyde de cérium, est ajouté au matériau d'électrode.

7. Elément de détection selon les revendications 5 ou 6, **caractérisé en ce que** les parois de la pré-chambre (20) qui portent les électrodes (26, 27) sont orientées parallèlement à l'axe central de l'ouverture d'entrée (24) de la pré-chambre (20) et à celui de l'ouverture d'entrée (22) du canal de diffusion (21) et **en ce que** les axes centraux sont de préférence alignés l'un sur l'autre.

8. Elément de détection selon l'une des revendications 1 à 7, **caractérisé en ce que** la section transversale d'amenée de gaz d'échappement dans la pré-chambre (20) est beaucoup plus grande que la section transversale d'amenée de gaz d'échappement sur la barrière de diffusion (25) prévue dans le canal de diffusion (21).

9. Elément de détection selon l'une des revendications 5 à 8, **caractérisé en ce que** lorsque la sonde de mesure est en fonctionnement, les électrodes (26, 27) de la pré-chambre (20) sont placées en permanence ou une partie du temps à un potentiel de tension continue plus élevé que celui de l'électrode extérieure (13) de la cellule de pompage (12).

10. Elément de détection selon l'une des revendications 5 à 7, **caractérisé en ce que** la surface des électrodes (26, 27) disposées dans la pré-chambre (20) est revêtue au moyen d'une opération électrochimique de formage d'un cermet formé du matériau d'électrode et du matériau de l'électrolyte solide (11).

11. Procédé de formage des électrodes (26, 27) prévues dans la pré-chambre (20) de l'élément de détection selon la revendication 7, **caractérisé en ce que** pendant une durée limitée, on applique sur les électrodes (26, 27) prévues dans la pré-chambre (20) et sur l'électrode extérieure (13) de la cellule de pompage (12) une tension continue d'un potentiel plus élevé que celui appliqué sur l'électrode extérieure (13).

12. Procédé selon la revendication 11, **caractérisé en ce que** la tension continue est plus élevée que la tension de décomposition du matériau de l'électrolyte solide (11).

13. Procédé selon les revendications 10 ou 11, **caractérisé en ce que**, pendant l'application de la tension continue, l'électrolyte solide (11) est chauffé à une température comprise entre 800 et 1 200°C.

14. Procédé selon l'une des revendications 11 à 13, **caractérisé en ce que** la durée de l'application de la tension continue sur les électrodes (26, 27) est de quelques minutes.

15. Procédé selon l'une des revendications 11 à 14, **caractérisé en ce que** pendant l'utilisation de la sonde de mesure, on applique de manière répétée une tension continue pendant une durée limitée.
